# EUROPÄISCHE PATENTSCHRIFT

(11) **EP 2 270 240 B1**
(45) Veröffentlichungstag und Bekanntmachung des Hinweises auf die Patenterteilung: **26.09.2012**
(21) Anmeldenummer: 10006890.7
(22) Anmeldetag: 02.07.2010
(51) Int. Cl.: C21C 5/52, F27B 3/18, F27D 3/00, F27D 13/00

(54) **Beschickungsverfahren und Beschickungsvorrichtung für einen Schmelzofen**
Charging device and method for a melting furnace
Procédé de recouvrement et dispositif de recouvrement pour un four à fusion

(30) Priorität: 03.07.2009 DE 102009031648
(43) Veröffentlichungstag der Anmeldung: 05.01.2011
(73) Patentinhaber: SMS Siemag Aktiengesellschaft, 40237 Düsseldorf (DE)
(72) Erfinder: Schlüter, Jochen, 44265 Dortmund (DE); Odenthal, Hans-jürgen, 40822 Mettmann (DE); Falkenreck, Udo, 44797 Bochum (DE); Miani, Stefano, 33040 Premariacco (IT); Gottardi, Riccardo, 8104 Weiningen (CH)
(74) Vertreter: Klüppel, Walter

(56) Entgegenhaltungen:
- US-A- 3 234 010
- US-A- 3 301 662
- US-A- 5 647 288

## Beschreibung

Die Erfindung richtet sich auf eine Beschickungsvorrichtung umfassend eine mit einem zugeordneten Schmelzofen, insbesondere einem Elektrolichtbogenofen, in Förderverbindung stehende und mit eisenhaltigem Material beschickbare Fördervorrichtung, die ein die Beschickung tragendes Transportelement aufweist und die mit dem zugeordneten Schmelzofen in einer dem Transportelement und der darauf geförderten Beschickung aus dem Schmelzofen abgezogenes, heißes Ofenabgas zuführenden Leitungsverbindung steht, wobei das Transportelement perforiert ausgebildet und derart in der Fördervorrichtung angeordnet ist, dass das heiße Ofenabgas durch die Beschickung und das Transportelement hindurchführbar ist.

Die Erfindung richtet sich weiterhin auf ein Beschickungsverfahren umfassend die Zuführung einer eisenhaltiges Material aufweisenden Beschickung in einen Schmelzofen mittels einer Fördervorrichtung, bei weichem die Beschickung aus eisenhaltigem Material während ihres Transportes in der Fördervorrichtung auf einem die Beschickung tragenden Transportelement mit aus dem zugeordneten Schmelzofen abgezogenem heißem Ofenabgas erwärmt wird, wobei das heiße Ofenabgas in der Fördervorrichtung durch die Beschickung und das Transportelement hindurch gesaugt wird.

Ein solches Beschickungsverfahren und eine solche Beschickungsvorrichtung sind im Zusammenhang mit Schmelzöfen zur Herstellung von Stahl bekannt. Mit der jeweiligen Vorrichtung wird dem Schmelzofen eisenhaltiges Material, wie Direktreduktionseisen in Form von Pellets oder Schrott, zugeführt. Dabei wird das eisenhaltige Material in einer ein feuerfestes Tunnelgewölbe aufweisenden Fördervorrichtung als auf einem Transportelement angeordnete Beschickung dem Schmelzofen zugeführt und während des Transportes durch in der Fördervorrichtung entgegenströmendes, aus dem zugeordneten Schmelzofen abgezogenes heisses Ofenabgas erwärmt. Das heiße Ofenabgas wird dabei in dem von dem tunnelförmigen Gewölbe überdeckten Bereich der Fördervorrichtung mittels eines am dem Eintrittsbereich des Ofenabgases in die Fördervorrichtung entgegengesetzten Ende der Fördervorrichtung wirkenden Gebläses längs des Transportweges und des Transportelementes über die und zum Teil in der Beschickung geführt. Dabei gibt das heiße Ofengas Wärme an die Beschickung ab und heizt diese auf, so dass die Beschickung vorgewärmt in den Schmelzofen gelangt, wo sie dann aufgeschmolzen und ggf. zu Stahl verarbeitet wird.

Die DD 250 136 A5 beschreibt ein solches Verfahren und eine solche Vorrichtung zum kontinuierlichen Vorwärmen von Beschickungsmaterialien zur Stahlherstellung bei einem elektrischen Ofenbetrieb. Hier wird das eisenhaltige Material in dem tunnelförmigen Gewölbe mittels einer Schwingrinne transportiert und mittels darüber angeordneter Brenner, aber auch mittels aus dem Schmelzofen einströmenden heißen Ofenabgases erwärmt. Das aus der Fördervorrichtung austretende Abgas wird oberhalb der Schwingrinne abgezogen. Diese bekannte Vorrichtung benötigt daher ein tunnelförmiges Gewölbe, das einen ausreichend großen Strömungsquerschnitt zur Aufnahme und Durchleitung auch des von den Brennern erzeugten Abgases ermöglicht. Ferner ist das Sauggebläse am dem Schmelzofen entgegengesetzten Ende der Fördervorrichtung wirkend angeordnet, so dass sich das tunnelförmige Gewölbe zumindest über einen beachtlichen Bereich längs des als Schwingrinne ausgebildeten Transportelementes mit einem entsprechend großen Strömungsquerschnitt erstreckt. Dies bedingt einen entsprechend hohen Investitionsaufwand bei der Erstellung der Vorrichtung. Weiterhin werden das Abgas der Brenner (falls in der Ausführung der Zuführrinne vorhanden) und/oder das heiße Ofenabgas von oben auf die Beschickung geführt. Dies führt dazu, dass die Wärmübertragung nur zu einem ganz geringen Anteil mittels Konvektion und in der Hauptsache mittels Strahlung erfolgt. Hierbei geht die Strahlung von im Ofenabgas enthaltenen Staubpartikeln und von der Gewölbewand des tunnelförmigen Gewölbes aus. Das in dieser Vorrichtung durchgeführte kontinuierliche Erwärmen der eisenhaltigen Beschickung, die insbesondere aus Schrott besteht, ist daher energetisch aufwändig, weil für den Betrieb der Brenner zusätzliche Energie benötigt wird. Des Weiteren wird die Wärme dem eisenhaltigen Material, z.B. Schrott, nur von oben zugeführt, so dass die Vorwärmung entsprechend ineffektiv ist. Aufgrund dieser Nachteile ist auch die aus der Nachverbrennung von im Ofenabgas mit einem Anteil von bis zu 40% enthaltenem CO wenig effektiv.

Aus der WO 2007/006558 A2 ist eine Vorrichtung bekannt, in welcher aus einem ' Stahlschmelzofen austretendes heißes Ofenabgas gezielt in einer dem Schmelzofen Schrott zuführenden Fördervorrichtung nachverbrannt wird. Hierbei wird in Abhängigkeit vom Sauerstoff- oder Kohlenmonoxid- Gehalt des Ofenabgases die Stellung von Klappen geregelt, über die Luft als Oxidationsmittel in den tunnelförmig gewölbten Abgaskanal der Fördervorrichtung geleitet wird. Dem Ofen zuzuführender Schrott wird während des Transportes in der Fördervorrichtung durch die Abgase vorgewärmt, die über die Oberfläche des Schrotts geführt werden. Auch hier ist die Vorwärmung wiederum ineffektiv, weil die Abgase im Wesentlichen nur an die obere Schicht des Schrotts gelangen.

Eine gattungsgemäße Vorrichtung und ein gattungsgemäßes Verfahren sind aus der US 5,647,288 A bekannt, die einen umlaufenden Gliederbandförderer, der Schrott von einer Aufgabestelle zu einem Schmelzofen fördert, offenbart.

Ebenso sind eine gattungsgemäße Vorrichtung und ein gattungsgemäßes Verfahren in der US 3,301,662 A offenbart, in der ein Sauerstoffaufblaskonverter, dessen Abgas zur Aufheizung von dem Sauerstoffaufblaskonverter zugeführtem Schrott genutzt wird, beschrieben ist.

Ein Schmelzofen, dem über eine Vibrationsrinne einzuschmelzendes Eisenmaterial zugeführt wird, ist aus der US 3,234,010 A bekannt.

Der Erfindung liegt daher die Aufgabe zugrunde, eine Lösung zu schaffen, die eine verbesserte Ausnutzung der Wärme des heißen Ofenabgases bei der Vorerwärmung des eisenhaltigen Materials ermöglicht.

Bei einer Vorrichtung der eingangs näher bezeichneten Art wird diese Aufgabe erfindungsgemäß dadurch gelöst, dass das Transportelement im letzten Förderabschnitt der Fördervorrichtung vor dem Schmelzofen als in einer Abgasleitung angeordneter, kühlbarer, perforierter oder gelochter und mit einem regelbaren Vibrationsantrieb gekoppelter Schwingförderer ausgebildet ist, dessen kühlbarer Innenraum mindestens einen Kühlmitteleinlass und einen Kühlmittelauslass aufweist.

Bei einem Verfahren der eingangs näher bezeichneten Art wird diese Aufgabe erfindungsgemäß dadurch gelöst, dass das Ofenabgas im letzten Förderabschnitt der Fördervorrichtung vor dem Schmelzofen durch die Beschickung und ein als in einer Abgasleitung angeordneter, kühlbarer, perforierter oder gelochter und mit einem regelbaren Vibrationsantrieb gekoppelter Schwingförderer ausgebildetes Transportelement gesaugt und die Beschickung auf dem perforierten, nach einem der Ansprüche 1 - 6 ausgebildeten Transportelement erwärmt wird.

Die jeweiligen Unteransprüche betreffen vorteilhafte Weiterbildungen und Ausgestaltungen der Erfindung.

Durch die Erfindung wird erreicht, dass der Wärmeinhalt des heißen Ofenabgases zur Vorerwärmung des eisenhaltigen Materials besser ausgenutzt wird. Es findet ein intensiver Kontakt zwischen dem heißen Ofenabgas und der dem Ofen zugeführten Beschickung aus eisenhaltigem Material, insbesondere Schrott, statt und somit ist ein hoher Wärmeübergang und eine gute Wärmeübertragung gewährleistet. Das Niveau des Wärme- und Energieeintrags in die Beschickung wird deutlich erhöht. Das eisenhaltige Material wird auf dem Förderweg zum Schmelzofen in der Fördervorrichtung somit effektiv vorgewärmt. Hierbei kann durch die Zuführung von zusätzlicher Energie, beispielsweise mittels Zusatzbrennern, Sauerstoff zur Oxidation des im heisßen Ofenabgas enthaltenen CO in die Fördereinrichtung einführen, oder mittels welcher Zusatzbrennstoff verbrannt wird, der Effekt maximiert werden. Auch verbessert dies die ggf. vorgesehene Stahlerzeugung insgesamt, da das eisenhaltige Material mit einer weitgehend gleichmäßigen Temperatur in den zugeordneten Schmelzofen eingeleitet wird und weil weniger Energie verbraucht wird. Auch führt dies zu verringerten Investitionskosten, da die Fördereinrichtung gegenüber dem Stand der Technik verkürzt ausgebildet werden kann. Auch kann auf ein Transportelement abdeckendes Tunnelgewölbe verzichtet werden, das über die gesamte Längserstreckung der Fördereinrichtung oberhalb des Transportelementes einen solchen Strömungsquerschnitt bereitstellt, damit dort eine große Abgasmenge entlang strömen kann.

Bei der Beschickungsvorrichtung ist es von Vorteil, wenn das Transportelement den letzten Förderabschnitt der Fördervorrichtung vor dem Schmelzofen ausbildet. Auch ist bei der Beschickungsvorrichtung in vorteilhafter Weise vorgesehen, dass das Transportelement kühlbar ausgebildet ist und insbesondere mindestens einen Kühlmitteleinlass und mindestens einen Kühlmittelauslass aufweist.

Ein besonders vorteilhaftes Bauteil oder Bauelement, welches ein Hindurchsaugen von Gas ermöglicht, ist ein perforiertes oder gelochtes, Gasdurchführungsöffnungen aufweisendes Bauteil. Die Erfindung sieht daher vor, dass die Beschickung auf einem perforierten Transportelement erwärmt wird.

Hierbei ist es dann weiterhin besonders zweckmäßig, wenn das Ofenabgas im letzten Förderabschnitt der Fördervorrichtung vor dem Schmelzofen durch die Beschickung und das Transportelement gesaugt wird.

Insgesamt wird durch die Erfindung eine effizientere und effektivere Energieausnutzung erzielt.

In konstruktive einfacher Art und Weise lässt sich die erfindungsgemäße Beschickungsvorrichtung dadurch ausbilden, dass der perforierte oder gelochte Schwingförderer eine perforierte oder gelochte Vibrationsschwinge oder -rinne ist, was die Erfindung ebenfalls vorsieht.

Die Lochung ist hierbei so dimensioniert, dass einerseits kein oder nur wenig Schrott durch die Löcher fallen kann und andererseits das Abgas sicher abgeleitet wird. Die Beschickung oder Schichtung des eisenhaltigen Materials wird bei einer vibrierenden Vorrichtung infolge der Vibration ständig verändert. Dies verbessert weiter den Wärmeübergang.

In weiterer Ausgestaltung sieht die Erfindung vor, dass die Vibrationsfrequenz der Vibrationsschwinge oder -rinne einstellbar ist. Auch hierdurch kann auf einfache Weise die Fördergeschwindigkeit und die Zuführmenge an eisenhaltigem Material zum Schmelzofen eingestellt werden.

Dies kann gegebenenfalls in Kombination mit der Einstellung der Neigung des Transportelementes erfolgen, weshalb die Erfindung auch vorsieht, dass die Neigung des Transportelementes einstellbar und verstellbar ist. Auch hierdurch kann auf einfache Weise eine Zuführmenge an eisenhaltigem Material zum Schmelzofen eingestellt werden.

Wie das Beschickungsverfahren zeichnet sich auch die Beschickungsvorrichtung dadurch aus, dass unterhalb des Transportelementes ein Sauggebläse angeordnet ist, mittels welchem das heiße Ofenabgas durch die Beschickung und das Transportelement hindurchsaugbar ist. Unterhalb des Transportelementes bedeutet hierbei, dass dieses im Betrieb von oben nach unten von dem heißen Ofenabgas durchströmt wird. Hierdurch kann das Abgas für eine gleichmäßige Durchströmung des Transportelementes sorgen und von oben nach unten zunächst durch das eisenhaltige Material und dann das Transportelement geführt sein. Entsprechendes gilt für die analoge verfahrensmässige Ausprägung der Erfindung.

Bei dieser Ausgestaltungsmöglichkeit ergibt sich dann derselbe Vorteil, wie er im Zusammenhang mit dem Verfahren angegeben ist.

Schliesslich sieht die Erfindung in Ausgestaltung auch vor, dass die Vorrichtung Bestandteil einer Anlage zur Stahlerzeugung, insbesondere ein Lichtbogenofen, ist. Insbesondere als einem Stahlschmelzofen vorgeschaltete Fördervorrichtung zur Erwärmung des dem Schmelzofen zuzuführenden eisenhaltigen Materials, insbesondere Schrotts, eignet sich die erfindungsgemäße Vorrichtung in vorteilhafter Weise.

Weiterhin ist es besonders zweckmäßig, wenn die Beschickung auf einer Vibrationsschwinge oder -rinne, erwärmt wird.

Um ein Durchbrennen des rostartig perforierten Transportelementes zu verhindern und eine lange Standzeit zu erzielen, sieht die Erfindung weiterhin vor, dass das Transportelement zumindest auf seiner der Beschickung abgewandten Seite gekühlt wird.

Das Hindurchsaugen des heißen Ofenabgases lässt sich gemäß einer Ausgestaltung des Verfahrens besonders gut dadurch realisieren, dass das heiße Ofenabgas von einem unterhalb des Transportelementes angeordneten Sauggebläse angesaugt wird.

Da das dem Schmelzofen zugeführte eisenhaltige Material, insbesondere Schrott, auf seinem Förderweg innerhalb der Fördervorrichtung gut erwärmt wird, kann die Fördergeschwindigkeit so eingestellt werden, dass die Beschickung dem Schmelzofen, insbesondere einem Elektrolichtbogenofen, kontinuierlich zugeführt und dabei ausreichend erwärmt wird, wodurch sich die Erfindung auch auszeichnet. Es muss keine chargenweise Zuführung zum zugeordneten Schmelzofen erfolgen.

Bei dem eisenhaltigen Material kann es sich um so genannten eisenhaltigen Schrott, Roheisen und direkt reduziertes Eisen in Pellet- oder Brikettform handeln. Schrott kann nach Reinheitsgrad getrennt sein oder in eine geeignete Größe geschreddert oder geschnitten sein, wenn dies für die Beschickung des zugeordneten Schmelzofens zweckmäßig ist.

Bei dem Schmelzofen kann es sich insbesondere um einen Elektrolichtbogenofen, einen Plasmaofen oder einen Induktionsofen und vorzugsweise einen solchen zur Stahlherstellung handeln.

Die Erfindung ist nachstehend anhand eines Ausführungsbeispiels unter Bezugnahme auf die zugehörige schematische Zeichnung näher erläutert.

Diese zeigt in
- Figur 1: schematisch eine Querschnittsansicht eines Tells einer erfindungsgemäßen Vorrichtung und in
- Figur 2: in schematischer Darstellung eine perspektivische Ansicht einer Vibrationsrinne mit vorgeschaltetem Transportband.

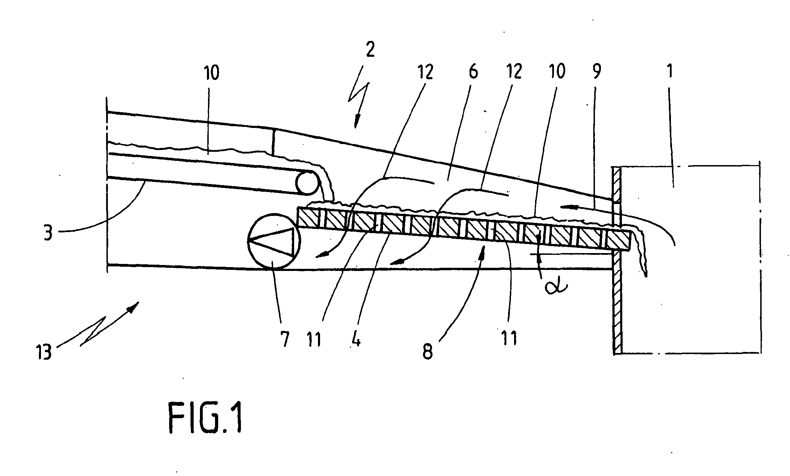

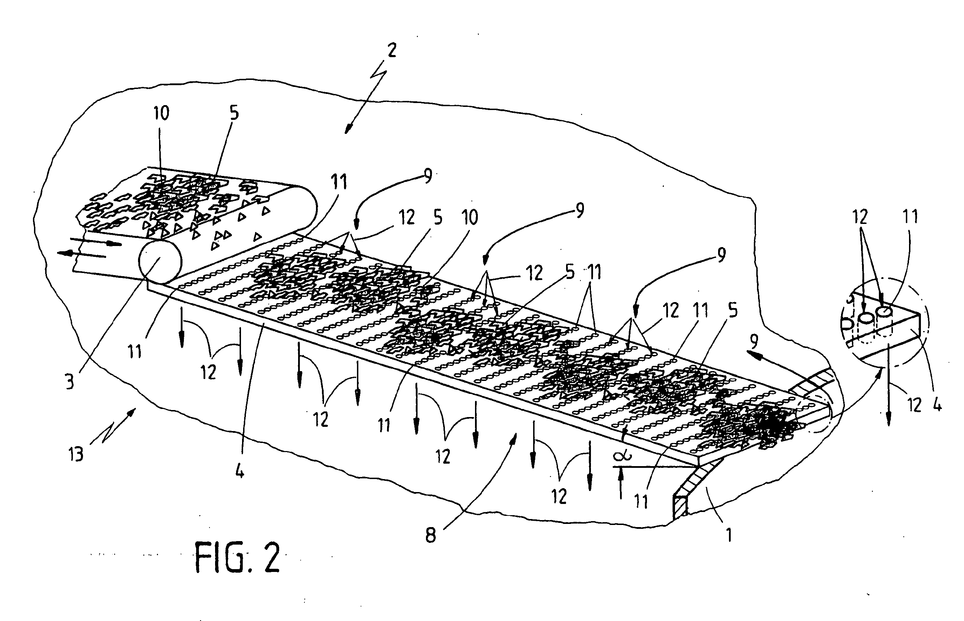

Wie aus den Figuren 1 und 2 ersichtlich ist, umfasst die insgesamt mit dem Bezugszeichen 13 bezeichnete Beschickungsvorrichtung einen Schmelzofen 1, vorzugsweise einen Elektrolichtbogenofen, zur Erzeugung von Stahl und eine darin endende Fördervorrichtung 2, die ein Transportband 3 und im letzten Förderabschnitt vor dem Schmelzofen 1 ein Transportelement 8 in Form einer Vibrationsrinne 4 aufweist. Die Fördervorrichtung 2 fördert Schrott in den Schmelzofen 1, der auf seinem Förderweg im Bereich des Transporteiementes 8 mittels des aus dem Schmelzofen 1 in die Fördervorrichtung 2 einströmenden heißen Ofenabgases 9 erwärmt wird.

Die Transportvorrichtung 2 umfasst als ersten Transportabschnitt das Transportband 3, das von einer Aufgabestelle für Schrott 5 in Richtung des Schmelzofens 1 geführt ist und als Beschickung 10 Schrott als eisenhaltiges Material fördert. Als letzten Förderabschnitt weist die Fördervorrichtung 2 ein als Vibrationsrinne 4 ausgebildetes perforiertes oder gelochtes Transportelement 8 auf, das unterhalb eines ofennahen Endes des Transportbands 3 beginnend in den Schmelzofen 1 geführt ist. Aus dem Schmelzofen 1 strömt heißes Abgas 9 aus und wird über die Beschickung 10 geführt sowie mittels eines unterhalb des Transportelementes 8 angeordneten Sauggebläses 7 durch die Beschickung und durch das Transportelement 8, im Ausführungsbeispiel die Vibrationsrinne 4, gesaugt.

Die Vibrationsrinne 4 ist aus Blech gebildet und mit mindestens einem nicht dargestellten regelbaren Vibrationsantrieb gekoppelt. Die Vibrationsrinne 4 ist mit durchgehenden Löchern 11 versehen, die sich gleichmäßig beabstandet senkrecht zu den Hauptflächen der Vibrationsrinne 4 erstrecken. Hierbei sind die Abstände und Querschnitte der Löcher 11 so gewählt, dass einerseits das Abgas 9 sicher und effektiv für einen Wärmeübergang durch die Beschickung 10 aus Schrott 5 geleitet werden kann, und dass andererseits der Schrott 5 nicht in und/oder durch die Löcher 11 gelangt. Die Vibrationsrinne 4 ist nach Art eines flachen Kastens oder einer Platte ausgebildet, wobei die Löcher 11 in den Hauptflächen gebildet und sich jeweils senkrecht gegenüber liegende Löcher 11 mit einem Rohrstück so verbunden sind, dass jeweils ein Strömungskanal für das heiße Ofenabgas 9 ausgebildet wird. Das Transportelement 8 ist im Übrigen kühlbar ausgebildet und weist mindestens einen Kühlmitteleinlass und einen Kühlmittefauslass auf. Die Vibrationsrinne 4 ist auf einem Gestell so gelagert, dass ihre Neigung über mindestens einen Antrieb verstellbar ist.

An dem Schmelzofen 1 ist als Bestandteil der Fördervorrichtung 2 eine Abgasleitung 6 derart angeschlossen, dass sie die Vibrationsrinne 4 weitgehend umschließt Hierbei wird das Abgas in der Abgasleitung 6 geführt und mittels des Gebläses 7 durch das Transportelement 8 und die Beschickung 10 hindurch gesaugt Eine Ableitung des Abgases 9 zur weiteren Behandlung erfolgt unterhalb der Vibrationsrinne 4 bzw. des Transportelementes 8.

Im Betrieb werden der Schrott 5 und gegebenenfalls Zuschlagstoffe auf das Transportband 3 gegeben und kontinuierlich auf die Vibrationsrinne 4 sowie weiter in den Schmelzofen 1 gefördert. Diesem wird die erforderliche Energie in Form von z.B. Strom zugeführt und so der Schrott 5 geschmolzen. Das hierbei entstehende Abgas 9 wird durch die Abgasleitung 6 aus dem Schmelzofen 1 über sowie durch den Schrott 5 und die Vibrationsrinne 4 geleitet, wie dies durch die Pfeile 12 in den Figuren 1 und 2 angedeutet ist. Durch die Vibration der Vibrationsrinne 4 und den Transport des Schrotts 5 wird dieser permanent umgeschichtet, so dass ein intensiver Kontakt und daher auch ein hoher Wärmeübergang zwischen dem Abgas 9 und der Beschickung 10 aus Schrott 5 erfolgt. Mittels des Ventilators oder Sauggebläses 7 wird das Abgas 9 anschließend einer weiteren Behandlung zugeführt. Damit die Vibrationsrinne 4 nicht zu heiß wird, wird über Anschlüsse ein Kühlmittel, z.B. Luft oder Wasser, durch das Transportelement 8, also den kastenartigen Innenraum der Vibrationsrinne 4, oder an diesem entlang geleitet.

Zum Einstellen der Transportgeschwindigkeit der Fördervorrichtung werden die Neigung α des Transportelementes 8, hier der Vibrationsrinne 4, zum Schmelzofen 1 hin und/oder die Laufgeschwindigkeit des Bandes 3 und/oder die Vibrationsfrequenz der Vibrationsrinne gesteuert oder geregelt, wobei generell mit steigender Neigung und Vibrationsfrequenz die Transportgeschwindigkeit zunimmt.

Der Betrieb des Schmelzofens 1, insbesondere zur Stahlherstellung, wenn die Beschickungsvorrichtung 13 Bestandteil einer Anlage zur Stahlherstellung ist, und die anschließende weitere Behandlung des Abgases 9 erfolgen wie von üblichen Anlagen bekannt.

## Patentansprüche

1. Beschickungsvorrichtung (13) umfassend eine mit einem zugeordneten Schmelzofen (1), insbesondere einem Elektrolichtbogenofen, in Förderverbindung stehende und mit eisenhaltigem Material beschickbare Fördervorrichtung (2), die ein die Beschickung (10) tragendes Transportelement (8) aufweist und die mit dem zugeordneten Schmelzofen (1) in einer dem Transportelement (8) und der darauf geförderten Beschickung (10) aus dem Schmelzofen (1) abgezogenes, heißes Ofenabgas (9) zuführenden Leitungsverbindung steht, wobei das Transportelement (8) perforiert ausgebildet und derart in der Fördervorrichtung (2) angeordnet ist, dass das heiße Ofenabgas (9) durch die Beschickung (10) und das Transportelement (8) hindurchführbar ist,
**dadurch gekennzeichnet,**
**dass** das Transportelement (8) im letzten Förderabschnitt der Fördervorrichtung (2) vor dem Schmelzofen (1) als in einer Abgasleitung (6) angeordneter, kühlbarer, perforierter oder gelochter und mit einem regelbaren Vibrationsantrieb gekoppelter Schwingförderer ausgebildet ist, dessen kühlbarer Innenraum mindestens einen Kühlmitteleinlass und einen Kühlmittelauslass auf weist.

2. Beschickungsvorrichtung (13) nach Anspruch 1,**dadurch gekennzeichnet, dass** der Schwingförderer eine perforierte oder gelochte Vibrationsschwinge oder -rinne (4) ist.

3. Beschickungsvorrichtung (13) nach Anspruch 1 oder 2, **dadurch gekennzeichnet, dass** die Vibrationsfrequenz der Vibrationsschwinge oder -rinne (4) einstellbar ist.

4. Beschickungsvorrichtung (13) nach einem der vorhergehenden Ansprüche, **dadurch gekennzeichnet, dass** die Neigung des Transportelementes (8) einstellbar und verstellbar ist.

5. Beschickungsvorrichtung (13) nach einem der vorhergehenden Ansprüche, **dadurch gekennzeichnet, dass** unterhalb des Transportelementes (8) ein Sauggebläse (7) angeordnet ist, mittels welchem das heiße Ofenabgas (9) durch die Beschickung (10) und das Transportelement (8) hindurchsaugbar ist.

6. Beschickungsvorrichtung (13) nach einem der vorhergehenden Ansprüche, **dadurch gekennzeichnet, dass** die Vorrichtung Bestandteil einer Anlage zur Stahlerzeugung, insbesondere ein Elektrolichtbogenofen, ist.

7. Beschickungsverfahren umfassend die Zuführung einer eisenhaltiges Material aufweisenden Beschickung (10) in einen Schmelzofen (1) mittels einer Fördervorrichtung (2), bei welchem die Beschickung (10) aus eisenhaltigem Material während ihres Transportes in der Fördervorrichtung (2) auf einem die Beschickung (10) tragenden Transportelement (8) mit aus dem zugeordneten Schmelzofen (1)abgezogenem heißem Ofenabgas (9) erwärmt wird, wobei das heiße Ofenabgas (9) in der Fördervorrichtung (2) durch die Beschickung (10) und das Transportelement (8) hindurch gesaugt wird,
**dadurch gekennzeichnet,**
**dass** das Ofenabgas (9) im letzten Förderabschnitt der Fördervorrichtung (2) vor dem Schmelzofen (1) durch die Beschickung (10) und ein als in einer Abgasleitung (6) angeordneter, kühlbarer, perforierter oder gelochter und mit einem regelbaren Vibrationsantrieb gekoppelter Schwingförderer ausgebildetes Transportelement (8) gesaugt und die Beschickung (10) auf dem perforierten, nach einem der Ansprüche 1 - 6 ausgebildeten Transportelement (8) erwärmt wird.

8. Beschickungsverfahren nach einem der vorhergehenden Ansprüche, **dadurch gekennzeichnet, dass** die Beschickung (10) auf einer Vibrationsschwinge oder -rinne (4) erwärmt wird.

9. Beschickungsverfahren nach einem der vorhergehenden Ansprüche, **dadurch gekennzeichnet, dass** das Transportelement (8) zumindest auf seiner der Beschickung (10) abgewandten Seite gekühlt wird.

10. Beschickungsverfahren nach Anspruch 1, **dadurch gekennzeichnet, dass** das heiße Ofenabgas (9) von einem unterhalb des Transportelementes (8) angeordneten Sauggebläse (7) angesaugt wird.

11. Beschickungsverfahren nach einem der vorhergehenden Ansprüche, **dadurch gekennzeichnet, dass** die Beschickung (10) dem Schmelzofen (1), insbesondere einem Elektrolichtbogenofen, kontinuierlich zugeführt und erwärmt wird.

## Claims

1. Charging device (13) comprising a conveyor device (2), which is disposed in conveying connection with an associated smelting furnace (1), particularly an electric arc furnace, and is chargeable with material having ferrous content and which comprises a transport element (8) carrying the charge (10) and is disposed in conducting connection with the associated smelting furnace (1) to feed to the transport element (8) and the charge (10) conveyed thereon hot furnace waste gas (9) extracted from the smelting furnace (1), wherein the transport element (8) is of perforated construction and so arranged in the conveyor device (2) that the hot furnace waste gas (9) can be led through the charge (10) and the transport element (8), **characterised in that** the transport element (8) in the last conveyor section of the conveyor device (2) in front of the smelting furnace (1) is constructed as a coolable, perforated or apertured vibratory conveyor which is arranged in a waste gas duct (6) and coupled with a regulable vibratory drive and the coolable interior space of which has at least one coolant inlet and coolant outlet.

2. Charging device (13) according to claim 1, **characterised in that** the vibratory conveyor is a perforated or apertured vibratory rocker or channel (4).

3. Charging device (13) according to claim 1 or 2, **characterised in that** the vibration frequency of the vibratory rocker or channel (4) is settable.

4. Charging device (13) according to any one of the preceding claims, **characterised in that** the inclination of the transport element (8) is settable and adjustable.

5. Charging device (13) according to any one of the preceding claims, **characterised in that** arranged below the transport element (8) is a suction fan (7) by means of which the hot furnace waste gas (9) can be sucked through the charge (10) and the transport element (8).

6. Charging device (13) according to any one of the preceding claims, **characterised in that** the device is a component of a plant for steel production, particularly an electric arc furnace.

7. Charging method comprising the feed of a charge (10), which comprises material with ferrous content, to a smelting furnace (1) by means of a conveyor device (2), in which the charge (10) of material with ferrous content is during transport thereof in the conveyor device (2) heated on a transport element (8), which carries the charge (10), by hot furnace waste gas (9) extracted from the associated smelt furnace (1), wherein the hot furnace waste gas (9) is sucked through the charge (10) and the transport element (8) in the conveyor device (2), **characterised in that** the furnace waste gas (9) in the last conveyor section of the conveyor device (2) before the smelting furnace (1) is sucked through the charge (10) and a transport element (8) constructed as a coolable, perforated or apertured vibratory conveyor arranged in a waste gas duct (6) and coupled with a regulable vibratory drive and the charge (10) is heated on the perforated transport element (8) constructed in accordance with any one of claims 1 to 6.

8. Charging method according to any one of the preceding claims, **characterised in that** the charge (10) is heated on a vibratory rocker or channel (4).

9. Charging method according to any one of the preceding claims, **characterised in that** the transport element (8) is cooled at least on its side remote from the charge (10).

10. Charging method according to claim 1, **characterised in that** the hot furnace waste gas (9) is sucked up by a suction fan (7) arranged below the transport element (8).

11. Charging method according to any one of the preceding claims, **characterised in that** the charge (10) is continuously fed to the smelting furnace (1), particularly an electric arc furnace, and heated.

## Revendications

1. Dispositif de chargement (13) comprenant un dispositif de transport (2) apte à être chargé avec une matière ferreuse et se trouvant en liaison de transport avec un four à fusion (1) qui lui est attribué, en particulier un four à arc électrique, qui présente un élément de transport (8) portant le chargement (10) et qui, avec le four fusion (1) qui lui est attribué, se trouve en liaison de guidage acheminant les gaz d'évacuation chauds (9) qui s'échappent du four à fusion (1) à l'élément de transport (8) et au chargement (10) transporté par-dessus ce dernier, l'élément de transport (8) étant réalisé avec des perforations et étant disposé dans le dispositif de transport (2) de telle sorte que les gaz d'évacuation chauds (9) peuvent être guidés à travers le chargement (10) et à travers l'élément de transport (8), **caractérisé en ce que** l'élément de transport (8) est réalisé, dans le dernier tronçon de transport du dispositif de transport (2), avant le four à fusion (1), sous la forme d'un transporteur vibratoire qui est disposé dans un conduit (6) pour les gaz d'évacuation, qui peut être refroidi, qui est perforé ou troué et qui est couplé à un entraînement vibratoire réglable, transporteur vibratoire dont l'espace interne qui peut être refroidi présente au moins une entrée pour un réfrigérant et une sortie pour un réfrigérant.

2. Dispositif de chargement (13) selon la revendication 1, **caractérisé en ce que** le transporteur vibratoire est une coulisse ou une goulotte vibrante (4) perforée ou trouée.

3. Dispositif de chargement (13) selon la revendication 1 ou 2, **caractérisé en ce qu'**on peut régler la fréquence de vibrations de la coulisse ou de la goulotte vibrante (4).

4. Dispositif de chargement (13) selon l'une quelconque des revendications précédentes, **caractérisé en ce qu'**on peut régler et modifier l'inclinaison de l'élément de transport (8).

5. Dispositif de chargement (13) selon l'une quelconque des revendications précédentes, **caractérisé en ce qu'**un ventilateur d'aspiration (7) est disposé en dessous de l'élément de transport (8), au moyen duquel on peut aspirer les gaz chauds d'évacuation (9) à travers le chargement (10) et à travers l'élément de transport (8).

6. Dispositif de chargement (13) selon l'une quelconque des revendications précédentes, **caractérisé en ce que** le dispositif est un constituant d'une installation pour la production d'acier, en particulier un four à arc électrique.

7. Procédé de chargement comprenant le fait d'acheminer un chargement (10) présentant une matière ferreuse dans un four à fusion (1) au moyen d'un dispositif de transport (2), dans lequel le chargement (10) constitué par une matière ferreuse, au cours de son transport dans le dispositif de transport (2) sur un élément de transport (8) portant le chargement (10) est chauffé avec les gaz d'évacuation chauds (9) qui s'échappent du four à fusion correspondant (1), les gaz d'évacuation chauds (9) étant aspirés dans le dispositif de transport (2) à travers le chargement (10) et à travers l'élément de transport (8), **caractérisé en ce que** les gaz d'évacuation (9) sont aspirés, dans le dernier tronçon de transport du dispositif de transport (2) avant le four à fusion (1) à travers le chargement (10) et à travers un élément de transport (8) réalisé sous la forme d'un transporteur vibratoire qui est disposé dans un conduit (6) pour les gaz d'évacuation, qui peut être refroidi, qui est perforé ou troué et qui est couplé à un entraînement vibratoire réglable, et le chargement (10) est chauffé sur l'élément de transport perforé (8) réalisé conformément à l'une quelconque des revendications 1 à 6.

8. Procédé de chargement selon l'une quelconque des revendications précédentes, **caractérisé en ce que** le chargement (10) est chauffé sur une coulisse ou une goulotte vibrante (4).

9. Procédé de chargement selon l'une quelconque des revendications précédentes, **caractérisé en ce que** l'élément de transport (8) est refroidi au moins sur son côté qui se détourne du chargement (10).

10. Procédé de chargement selon la revendication 1, **caractérisé en ce que** les gaz d'évacuation chauds (9) sont aspirés par un ventilateur d'aspiration (7) disposé en dessous de l'élément de transport (8).

11. Procédé de chargement selon l'une quelconque des revendications précédentes, **caractérisé en ce que** le chargement (10) est acheminé en continu au four à fusion (1), en particulier à un four à arc électrique, et est chauffé en continu.
